# FASCICULE DE BREVET EUROPEEN

(11) **EP 1 972 529 B1**
(45) Date de publication et mention de la délivrance du brevet: **27.10.2010**
(21) Numéro de dépôt: 08102772.4
(22) Date de dépôt: 19.03.2008
(51) Int. Cl.: B62D 65/16, B60Q 1/04

(54) **Ensemble d'une pièce de carrosserie et d'un vitrage optique pour véhicule automobile**
Einheit aus einem Karosserieteil und einem Sichtfenster für Kraftfahrzeug
Assembly of a bodywork part and an optical window for an automobile

(30) Priorité: 20.03.2007 FR 0753937
(43) Date de publication de la demande: 24.09.2008
(73) Titulaire: Compagnie Plastic Omnium, 69007 Lyon (FR)
(72) Inventeur: Goffart, David, 69001, LYON (FR); Garboud, Lilian, 01150, LAGNIEU (FR); Verwaerde, Marc, 38460, MORAS (FR); Barbier, Pascal, 01100, OYONNAX (FR)
(74) Mandataire: Remy, Vincent Noel Paul

(56) Documents cités:
- EP-A- 1 544 034
- FR-A- 2 488 556
- FR-A- 2 781 736
- JP-A- 11 348 648
- JP-A- 2001 122 015
- JP-A- 2001 243 813
- JP-A- 2002 036 984
- JP-A- 2006 264 504
- US-A- 3 998 178

## Description

### Domaine technique.

La présente invention concerne le domaine des pièces de carrosserie et des vitrages d'optiques pour véhicules automobiles.

### Etat de la technique.

On sait que la mise en référence des pièces de carrosserie autour des vitrages d'optiques, afin d'obtenir des jeux et affleurements satisfaisants, est un souci permanent chez les constructeurs automobiles.

Afin d'améliorer cette mise en référence, on connaît déjà du document FR 2 855 800 un module rapporté sur le véhicule, comportant une aile, un bloc optique avec un vitrage muni d'un contour destiné à être emboîté dans une ouverture de l'aile délimitée par un contour sensiblement complémentaire au contour du vitrage d'optique, et une structure de réception de ce bloc optique. Cette structure de réception est destinée à améliorer la mise en référence du vitrage d'optique par rapport à l'aile.

Néanmoins, un bon positionnement du vitrage d'optique par rapport à l'aile demeure difficile, du fait que les dimensions peuvent varier considérablement d'un vitrage d'optique à l'autre, en raison de tolérances de fabrication.

Le document US 3998178 A décrit un ensemble selon le préambule de la revendication 1.

### Solution proposée.

L'invention vise à fournir un ensemble d'au moins une pièce de carrosserie et d'un vitrage d'optique, garantissant que le vitrage d'optique est convenablement mis en référence par rapport aux pièces de carrosserie environnantes.

A cet effet, l'invention a pour objet un ensemble d'une pièce de carrosserie et d'un vitrage d'optique pour véhicule automobile selon la revendication 1 et un procédé d'assemblage d'une pièce de carrosserie et d'un vitrage d'optique de véhicule automobile selon la revendication 9.

On notera que le contour du vitrage d'optique délimite la partie du vitrage visible depuis l'extérieur du véhicule. Ainsi, ce contour peut être encadré par un bord périphérique du vitrage, non visible depuis l'extérieur, destiné par exemple à fixer le vitrage sur un boîtier optique. Par ailleurs, le vitrage optique peut être une pièce isolée, ou bien être d'un seul tenant avec un boîtier optique.

### Avantages particuliers.

Grâce à la déformation élastique, on obtient un positionnement particulièrement efficace de la pièce de carrosserie autour du vitrage d'optique, puisque l'on réduit considérablement les jeux traditionnellement formés entre le vitrage d'optique et une pièce de carrosserie. On obtient ainsi un ensemble convenablement positionné, quelles que soient les dispersions de dimension du vitrage d'optique, ou encore de la pièce de carrosserie, non seulement avec un jeu réduit, mais également avec un jeu constant.

En outre, le positionnement de la pièce de carrosserie autour du vitrage d'optique est particulièrement facile à mettre en oeuvre, ce qui engendre une réduction des coûts de montage. En effet, la coopération par déformation élastique permet d"'enfiler" simplement la pièce de carrosserie autour du vitrage d'optique, sans avoir à prévoir des opérations délicates de positionnement.

Selon l'invention, le contour de la pièce de carrosserie est fermé et présente un périmètre qui, lorsqu'elle est isolée du vitrage d'optique, est inférieur ou égal à celui du contour du vitrage d'optique. Ainsi, comme l'ouverture de la pièce de carrosserie est plus petite que le contour du vitrage d'optique, on garantit la coopération par déformation élastique, et on ne risque donc pas de créer des jeux indésirables entre le vitrage d'optique et certaines parties de la pièce de carrosserie. On assure en outre un bon maintien de la pièce de carrosserie autour du vitrage d'optique. On notera que, dans le cas où un joint est intercalé entre la pièce de carrosserie et le vitrage, le périmètre du contour de la pièce de carrosserie peut également être inférieur ou égal à celui du joint associé au vitrage, lorsque le joint est monté sur le vitrage d'optique, ou bien que le périmètre du joint associé à la pièce de carrosserie, lorsqu'il est monté sur la pièce de carrosserie, est inférieur ou égal à celui du contour du vitrage d'optique.
- Selon l'invention l'ensemble comporte en outre un renfort de la pièce de carrosserie qui est rapporté sur une partie de la pièce de carrosserie distincte de la partie déformable. Ce renfort permet d'assurer par exemple une fonction d'anti-cloquage de la pièce de carrosserie, voire de support du bloc optique. Comme ce renfort doit avoir une certaine raideur, la partie de la pièce de carrosserie sur laquelle il est rapporté devient relativement raide, c'est pourquoi il est préférable que la pièce de carrosserie soit dépourvue de ce renfort dans sa partie déformable. Le renfort peut par exemple s'étendre en U autour du contour de la pièce de carrosserie, laissant ainsi une partie du contour dégagée pour permettre une déformation de la pièce de carrosserie. Le renfort peut également se présenter sous la forme d'une lunette fermée ou peu ouverte encadrant le contour de la pièce de carrosserie pour assurer sa tenue, mais définissant un espace avec le contour de la pièce de carrosserie, au moins sur une partie du contour, cet espace étant en regard de la partie déformable de la pièce de carrosserie.
   L'invention peut en outre comporter l'une ou plusieurs des caractéristiques suivantes.
- La pièce de carrosserie comporte une partie déformable élastiquement située au-dessus du vitrage d'optique lorsque la pièce de carrosserie et le vitrage d'optique sont assemblés.
- L'ensemble comporte en outre, au moins sur une partie du contour du vitrage optique, un élastomère agencé entre la pièce de carrosserie et le vitrage d'optique, ou bien entre la pièce de carrosserie et un boîtier d'optique sur lequel est rapporté le vitrage d'optique. Ainsi, on peut écraser un joint entre la pièce de carrosserie et le bloc optique du véhicule, ce qui a pour effet de combler les dispersions de dimensions d'un vitrage d'optique à l'autre. En conséquence, avec une même pièce de carrosserie, le joint sera très comprimé si le vitrage est de grande dimension, et peu comprimé dans le cas contraire, mais dans les deux cas, le jeu sera régulier.
- L'élastomère présente des propriétés d'écrasement non uniformes sur sa longueur, afin de rendre homogène la déformation de la pièce de carrosserie. En effet, certaines parties du contour de la pièce de carrosserie sont susceptibles de se déformer davantage que d'autres, ce qui pourrait créer des jeux différents le long du contour de la pièce. Ainsi, afin d'absorber les différences de souplesse de la pièce de carrosserie, l'élastomère peut s'écraser davantage au droit des zones souples de la pièce de carrosserie, et résister davantage à l'écrasement au droit des zones peu déformables de la pièce de carrosserie, de façon à maintenir un jeu constant malgré les différences de souplesse.
- L'élastomère est une mousse dont la densité est variable sur sa longueur.
- La pièce de carrosserie comporte des nervures d'espacement au voisinage de son contour. Elles ont pour effet de garantir un jeu minimum entre la pièce de carrosserie et le vitrage d'optique, notamment dans les zones où l'élastomère risquerait d'être trop comprimé.
- La pièce de carrosserie est une aile.
- Le contour de la pièce de carrosserie délimitant l'ouverture est fermé.
- La déformation élastique de la pièce de carrosserie est un étirement du contour de la pièce de carrosserie autour du vitrage. La déformation est donc entendue comme une déformation continue, répartie sur une certaine surface et le long du contour de la pièce de carrosserie. La pièce de carrosserie comporte ainsi une partie déformable élastiquement qui s'étend de préférence sur plus de 20% du contour du vitrage d'optique. On notera que cette déformation continue se distingue d'une déformation élastique ponctuelle ou discrète, telle qu'une déformation d'une ou plusieurs languettes élastiques qui seraient réalisées au voisinage du contour de la pièce de carrosserie. Par ailleurs, la partie de la pièce de carrosserie qui est déformée élastiquement est de préférence visible depuis l'extérieur du véhicule. En effet, comme on déforme la pièce de carrosserie par étirement, et non par une déformation ponctuelle, la déformation est répartie le long du contour et ne se voit donc pas à l'oeil nu, si bien qu'elle ne nécessite pas d'être réalisée sur une partie non visible de la pièce de carrosserie.

L'invention a également pour objet un procédé d'assemblage d'une pièce de carrosserie et d'un bloc optique de véhicule automobile, dans lequel le vitrage d'optique a un contour destiné à être emboîté dans une ouverture de la pièce de carrosserie délimitée par un contour de la pièce de carrosserie sensiblement complémentaire du contour du vitrage d'optique, au cours duquel, pour assembler le vitrage d'optique et la pièce de carrosserie, on agrandit l'ouverture de la pièce de carrosserie.

L'invention a par ailleurs pour objet un procédé d'assemblage d'une pièce de carrosserie et d'un vitrage d'optique de véhicule automobile, dans lequel le vitrage d'optique a un contour destiné à être emboîté au moins en partie dans une ouverture de la pièce de carrosserie délimitée par un contour de la pièce de carrosserie au moins en partie sensiblement complémentaire du contour du vitrage d'optique, au cours duquel, pour assembler le vitrage d'optique et la pièce de carrosserie, on agrandit par déformation élastique l'ouverture de la pièce de carrosserie, cette déformation élastique de l'ouverture étant maintenue une fois la pièce de carrosserie et le vitrage d'optique assemblés. On notera que ce procédé se distingue d'un procédé d'assemblage par encliquetage, au cours duquel la déformation élastique n'a plus lieu une fois la pièce et le vitrage assemblés.

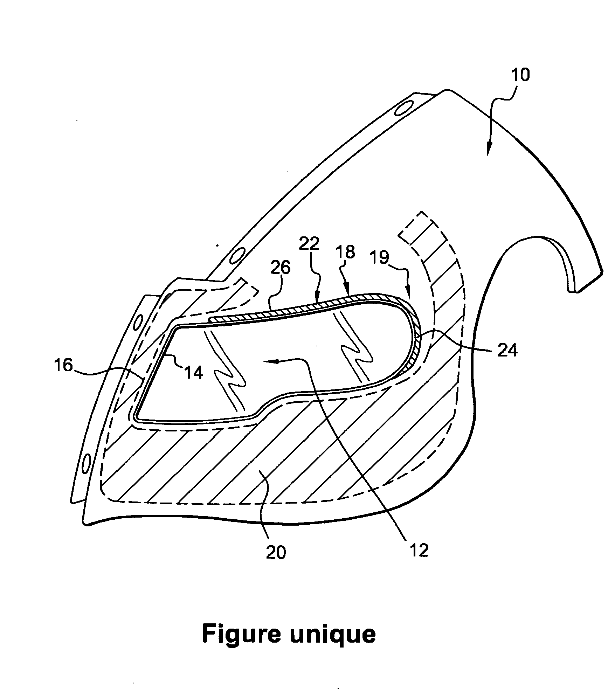

### Description de la figure.

L'invention sera mieux comprise à la lecture de la description qui va suivre, donnée uniquement à titre d'exemple et faite en se référant à la figure unique, correspondant à une vue de face schématique d'un ensemble d'une pièce de carrosserie et d'un vitrage d'optique selon l'invention.

On a représenté sur la figure une pièce de carrosserie comprenant une aile avant 10 de véhicule automobile, réalisée en matière plastique, par exemple en polypropylène. On a également représenté un vitrage d'optique 12, rapporté sur un boîtier d'optique non visible.

Le vitrage 12 a un contour 14 délimitant la partie du vitrage 12 visible depuis l'extérieur du véhicule lorsque l'ensemble de l'aile 10 et du vitrage 12 est monté sur le véhicule. Le contour 14 est destiné à être emboîté dans une ouverture de l'aile 10, cette ouverture étant délimitée par un contour 16 de l'aile sensiblement complémentaire du contour 14 du vitrage d'optique 12.

Afin de s'assurer que le contour 16 de l'aile 10 coopère par déformation élastique avec le contour 14 du vitrage 12, le périmètre du contour 16, lorsque le vitrage et l'aile sont isolés l'un de l'autre, est plus petit que le périmètre du contour 14 du vitrage 12 en tenant compte de la présence éventuelle d'un joint.

On prévoit que certaines parties du contour 16 de l'aile soient davantage déformables que les autres. Ainsi, la partie 18 du contour 16 de l'aile, située sensiblement au-dessus du vitrage 12, et correspondant à la partie la plus échancrée de l'aile, est davantage déformable que la partie du contour située en dessous du vitrage 12. Cette partie 18, que l'on appelle zone souple ou déformable, est rendue plus souple que le reste du contour 16, du fait qu'aucun élément raide n'est rapporté dessus. En revanche, dans l'autre partie du contour 16, on rapporte sur le côté intérieur de l'aile 10 un renfort 20 du bloc optique (représenté en pointillés), si bien que cette partie est relativement rigide et se déforme très peu. Le renfort 20 s'étend autour du contour 16, de façon à former une lunette peu ouverte pour empêcher le cloquage de l'aile, mais cette lunette définissant un espace 19 avec une partie du contour 16, cet espace étant en regard de la zone souple 18 de l'aile. Ainsi, le renfort 20 n'est pas rapporté derrière la zone souple 18 afin de permettre la déformation de cette zone 18. Dans une variante non illustrée, le renfort peut également se présenter sous la forme d'une lunette fermée.

Afin de rendre le jeu entre les contours 14 et 16 plus uniforme, on prévoit un joint 22 entre l'aile 10 et le vitrage 12. Sur la figure, le joint n'est prévu qu'au droit de la zone souple 18 de l'aile, mais il pourrait être prévu tout le long du contour 16 de l'aile. Ce joint peut présenter des propriétés de déformation différentes, il est par exemple en mousse, moins dense dans la partie 24 que dans la partie 26. Ainsi, on peut prévoir que la partie 24 du joint, située au niveau de l'échancrure de l'aile, correspondant à une zone particulièrement souple de l'aile, s'écrase plus facilement que la partie 26 du joint située dans une zone un peu moins déformable de l'aile, de façon que le jeu soit maintenu constant quelle que soit la souplesse des parties de l'aile.

L'aile comporte en outre, sur sa paroi intérieure, des nervures d'espacement, au voisinage de son contour 16.

Grâce à la partie déformable 18 de l'aile 10, on peut assembler le vitrage d'optique 12 et l'aile en agrandissant l'ouverture de l'aile 10, c'est-à-dire en augmentant le périmètre du contour 16. Ainsi, le contour 16 de l'aile et le contour 14 du vitrage d'optique coopèrent, au moins au voisinage de la zone souple 18, par déformation élastique. On garantit donc un jeu minimal et constant entre ces deux contours 14, 16. On comprendra que la déformation a lieu non seulement au cours du procédé d'assemblage, mais également une fois la pièce de carrosserie et le vitrage assemblés, c'est-à-dire que l'on maintient l'ouverture déformée une fois la pièce et le vitrage positionnés. En d'autres termes, le périmètre du contour de l'ouverture une fois la pièce et le vitrage positionnés est supérieur au périmètre du contour avant assemblage de la pièce et du vitrage.

On notera que la zone souple 18 est dans cet exemple visible depuis l'extérieur du véhicule. Elle s'étend sur une distance supérieure à 20% du périmètre du vitrage d'optique 12. Cette zone souple se déforme continûment le long du vitrage 12, de façon à pouvoir étirer l'aile autour du vitrage. Du fait qu'elle est visible depuis l'extérieur, et du fait en outre qu'elle se déforme de façon continue, cette zone souple 18 se distingue d'une languette élastique réalisée sur un bord intérieur de l'aile.

Parmi les avantages de l'invention, on comprendra que la déformation élastique est toujours présente une fois la pièce de carrosserie et le vitrage d'optique positionnés définitivement l'un par rapport à l'autre sur le véhicule, ce qui assure un jeu minimal et constant entre les deux éléments dans leur position définitive. On comprendra qu'un tel assemblage de la pièce et du vitrage se distingue d'un assemblage par encliquetage.

## Revendications

1. Ensemble d'une pièce de carrosserie (10) et d'un vitrage d'optique (12) pour véhicule automobile, la pièce de carrosserie étant positionnée autour du vitrage d'optique, le vitrage d'optique ayant un contour (14) emboîté au moins en partie dans une ouverture de la pièce de carrosserie, l'ouverture étant délimitée par un contour (16) de la pièce de carrosserie a moins en partie sensiblement complémentaire du contour du vitrage d'optique, ensemble dans lequel le contour de la pièce de carrosserie (10) coopère au moins en partie par déformation élastique avec le contour du vitrage d'optique (12) et dans lequel le contour (16) de la pièce de carrosserie est fermé et présente un périmètre qui, lorsque la pièce est isolée du vitrage d'optique, est inférieur ou égal à celui du contour (14) du vitrage d'optique, l'ensemble **caractérisé en ce que** la pièce de carrosserie comporte une partie (18) déformable élastiquement, l'ensemble comportant en outre un renfort (20) de la pièce de carrosserie, rapporté sur une autre partie du contour de la pièce de carrosserie qui est distincte de la partie déformable (18).

2. Ensemble selon la revendication 1, dans lequel la pièce de carrosserie comporte une partie (18) déformable élastiquement située au-dessus du vitrage d'optique (12) lorsque la pièce de carrosserie et le vitrage d'optique sont assemblés.

3. Ensemble selon l'une quelconque des revendications 1 à 2, comportant en outre un élastomère (22) agencé entre la pièce de carrosserie et le vitrage d'optique, ou bien entre la pièce de carrosserie et un boîtier d'optique sur lequel est rapporté le vitrage d'optique.

4. Ensemble selon la revendication 3, dans lequel l'élastomère (22) présente des propriétés d'écrasement non uniformes sur sa longueur.

5. Ensemble selon la revendication 4, dans lequel l'élastomère (22) est une mousse dont la densité est variable sur sa longueur.

6. Ensemble selon l'une quelconque des revendications 1 à 5, dans lequel la pièce de carrosserie comporte des nervures d'espacement au voisinage de son contour.

7. Ensemble selon l'une quelconque des revendications 1 à 6, dans lequel la pièce de carrosserie est une aile (10).

8. Ensemble selon l'une quelconque des revendications précédentes, dans lequel la déformation élastique de la pièce de carrosserie est un étirement du contour de la pièce de carrosserie autour du vitrage.

9. Procédé d'assemblage d'une pièce de carrosserie et d'un vitrage d'optique de véhicule automobile, dans lequel le vitrage d'optique a un contour (14) destiné à être emboîté au moins en partie dans une ouverture de la pièce de carrosserie délimitée par un contour (16) de la pièce de carrosserie au moins en partie sensiblement complémentaire du contour du vitrage d'optique, au cours duquel, pour assembler le vitrage d'optique (12) et la pièce de carrosserie (10), on agrandit par déformation élastique l'ouverture de la pièce de carrosserie, cette déformation élastique de l'ouverture étant maintenue une fois la pièce de carrosserie et le vitrage d'optique assemblés, procédé d'assemblage selon lequel le contour (16) de la pièce de carrosserie est fermé et présente un périmètre qui, lorsque la pièce est isolée du vitrage d'optique, est inférieur ou égal à celui du contour (14) du vitrage d'optique, et selon lequel le contour de la pièce de carrosserie comporte une partie (18) déformable élastiquement, l'ensemble comportant en outre un renfort (20) de la pièce de carrosserie, rapporté sur une autre partie du contour de la pièce de carrosserie qui est distincte de la partie déformable (18).

## Claims

1. An assembly of a bodywork part (10) and a headlight glass (12) for a motor vehicle, the bodywork part being positioned around the headlight glass, the headlight glass having an outline (14) that is engaged at least in part in an opening in the bodywork part, the opening being defined by an outline (16) in the bodywork part that is substantially complementary, at least in part, to the outline of the headlight glass, in which assembly at least part of the outline of the bodywork part (10) cooperates with the outline of the headlight glass (12) by elastic deformation, and in which assembly the outline (16) of the bodywork part is closed and presents a perimeter that, when the bodywork part is isolated from the headlight glass, is shorter than or equal to the perimeter of the outline (14) of the headlight glass, the assembly being **characterized in that** the bodywork part includes an elastically deformable portion (18), the assembly further including reinforcement (20) for the bodywork part, the reinforcement being fitted to another portion of the outline of the bodywork part that is distinct from its deformable portion (18).

2. An assembly according to claim 1, in which the bodywork part includes an elastically deformable portion (18) situated over the headlight glass (12) when the bodywork part and the headlight glass are assembled together.

3. An assembly according to any one of claims 1 to 2, further including an elastomer (22) arranged between the bodywork part and the headlight glass, or between the bodywork part and a headlight unit on which the headlight glass is fitted.

4. An assembly according to claim 3, in which the elastomer (22) presents non-uniform flattening properties along its length.

5. An assembly according to claim 4, in which the elastomer (22) is a foam of density that varies along its length.

6. An assembly according to any one of claims 1 to 5, in which the bodywork part includes spacer ribs in the vicinity of its outline.

7. An assembly according to any one of claims 1 to 6, in which the bodywork part is a fender (10).

8. An assembly according to any preceding claim, in which the elastic deformation of the bodywork part comprises stretching the outline of the bodywork part around the glass.

9. A method of assembling a bodywork part and a headlight glass for a motor vehicle, in which method the headlight glass has an outline (14) for engaging at least in part in an opening in the bodywork part that is defined by an outline (16) in the bodywork part that is substantially complementary, at least in part, to the outline of the headlight glass, during which method, in order to assemble the headlight glass (12) with the bodywork part (10), the opening in the bodywork part is enlarged by being deformed elastically, the opening continuing to be elastically deformed once the bodywork part and the headlight glass have been assembled together, the method of assembly being of the type in which the outline (16) of the bodywork part is closed and presents a perimeter that, when the bodywork part is isolated from the headlight glass, is shorter than or equal to the perimeter of the outline (14) of the headlight glass and in which the outline of the bodywork part includes an elastically deformable portion (18), the assembly further including reinforcement (20) for the bodywork part, the reinforcement being fitted to another portion of the outline of the bodywork part that is distinct from its deformable portion (18).

## Patentansprüche

1. Anordnung aus einem Karosserieteil (10) und einem Sichtfenster (12) für Kraftfahrzeug, wobei das Karosserieteil um das Sichtfenster positioniert ist, wobei das Sichtfenster eine Kontur (14) hat, die mindestens teilweise in eine Öffnung des Karosserieteils eingepasst ist, wobei die Öffnung von einer Kontur (16) des Karosserieteils begrenzt ist, die zumindest teilweise zur Kontur des Sichtfensters komplementär ist, bei der die Kontur des Karosserieteils (10) mindestens teilweise durch elastische Verformung mit der Kontur des Sichtfensters zusammenwirkt, und bei die Kontur (16) des Karosserieteils geschlossen ist und einen Umfang aufweist, der, wenn das Teil von dem Sichtfenster getrennt ist, kleiner oder gleich dem der Kontur (14) des Sichtfensters ist, wobei die Anordnung **dadurch gekennzeichnet ist, dass** die Kontur des Karosserieteils einen elastisch verformbaren Teil (18) aufweist, wobei die Anordnung ferner eine Verstärkung (20) des Karosserieteils aufweist, die an einen anderen Teil der Kontur des Karosserieteils, der von dem verformbaren Teil (18) verschieden ist, angebaut ist.

2. Anordnung nach Anspruch 1, bei der das Karosserieteil einen elastisch verformbaren Teil (18) aufweist, der sich oberhalb des Sichtfensters (12) befindet, wenn das Karosserieteil und das Sichtfenster zusammengebaut sind.

3. Anordnung nach einem der Ansprüche 1 bis 2, die ferner ein Elastomer (22) aufweist, das zwischen dem Karosserieteil und dem Sichtfenster oder zwischen dem Karosserieteil und einem Optikgehäuse, an dem das Sichtfenster gehalten ist, angeordnet ist.

4. Anordnung nach Anspruch 3, bei der das Elastomer (22) Zusammendrückeigenschaften aufweist, die auf seiner Länge nicht gleichmäßig sind.

5. Anordnung nach Anspruch 4, bei der das Elastomer (22) ein Schaumstoff ist, dessen Dichte auf seiner Länge variabel ist.

6. Anordnung nach einem der Ansprüche 1 bis 5, bei der das Karosserieteil Beabstandungsrippen in der Nähe seiner Kontur aufweist.

7. Anordnung nach einem der Ansprüche 1 bis 6, bei der das Karosserieteil ein Flügel (10) ist.

8. Anordnung nach einem der vorhergehenden Ansprüche, bei der die elastische Verformung des Karosserieteils ein Dehnen der Kontur des Karosserieteils um das Sichtfenster ist.

9. Verfahren zum Zusammenbauen eines Karosserieteils und eines Sichtfensters eines Kraftfahrzeugs, bei dem das Sichtfenster eine Kontur (14) hat, die dazu bestimmt ist, mindestens teilweise in eine Öffnung des Karosserieteils, die von einer Kontur (16) des Karosserieteils begrenzt ist, die mindestens teilweise zu der Kontur des Sichtfensters komplementär ist, eingepasst zu werden, bei dem man zum Zusammenbauen des Sichtfensters (12) und des Karosserieteils (10) die Öffnung des Karosserieteils durch elastische Verformung vergrößert, wobei diese elastische Verformung der Öffnung beibehalten wird, sobald das Karosserieteil und das Sichtfenster zusammengebaut sind, wobei bei dem Zusammenbauverfahren die Kontur (16) des Karosserieteils geschlossen ist und einen Umfang aufweist, der, wenn das Teil von dem Sichtfenster getrennt ist, kleiner oder gleich dem der Kontur (14) des Sichtfensters ist, und wobei die Kontur des Karosserieteils einen elastisch verformbaren Teil (18) aufweist, wobei die Anordnung ferner eine Verstärkung (20) des Karosserieteils aufweist, die an einen anderen Teil der Kontur des Karosserieteils, der von dem verformbaren Teil (18) verschieden ist, angebaut ist.
